# EUROPÄISCHE PATENTSCHRIFT

(11) **EP 4 284 588 B1**
(45) Veröffentlichungstag und Bekanntmachung des Hinweises auf die Patenterteilung: **29.01.2025**
(21) Anmeldenummer: 21806129.9
(22) Anmeldetag: 04.11.2021
(51) Int. Cl.: B23K 20/12

(54) **RÜHRREIBSCHWEISSWERKZEUG UND RÜHRREIBSCHWEISSVERFAHREN**
FRICTION STIR WELDING TOOL AND FRICTION STIR WELDING METHOD
OUTIL DE SOUDAGE PAR FRICTION-MALAXAGE ET PROCÉDÉ DE SOUDAGE PAR FRICTION-MALAXAGE

(30) Priorität: 27.01.2021 AT 500452021
(43) Veröffentlichungstag der Anmeldung: 06.12.2023
(73) Patentinhaber: Stirtec GmbH, 8401 Kalsdorf bei Graz (AT)
(72) Erfinder: FIGNER, Gunter, 8043 Graz (AT); CALISKANOGLU, Ozan, 8010 Graz (AT); OPPENEIGER, Lucas, 8020 Graz (AT); PFEIFFER, Christian, 8010 Graz (AT); WEINBERGER, Thomas, 8047 Graz (AT)
(74) Vertreter: Wirnsberger & Lerchbaum Patentanwälte OG
(86) Internationale Anmeldenummer: PCT/AT2021/060403
(87) Internationale Veröffentlichungsnummer: WO 2022/159992

(56) Entgegenhaltungen:
- WO-A1-98/51441
- WO-A2-2006/116288
- US-A1- 2006 102 699

## Beschreibung

Die Erfindung betrifft ein Rührreibschweißwerkzeug für eine Werkzeugmaschine, welche ein Gestell und eine relativ zum Gestell drehbare Spindel aufweist, wobei das Rührreibschweißwerkzeug einen Pin und eine Schulter sowie einen Antriebsschaft aufweist, welcher mit der Spindel der Werkzeugmaschine verbindbar ist, um über die Spindel den Pin und die Schulter in eine Drehbewegung um eine Rotationsachse zu versetzen, wobei die Schulter relativ zum Pin um die Rotationsachse drehbar ist. Darüber hinaus betrifft die Erfindung ein Rührreibschweißverfahren, wobei ein Rührreibschweißwerkzeug mit einem Antriebsschaft, einem Pin und einer Schulter mit einer Spindel einer Werkzeugmaschine in eine Rotationsbewegung um eine Rotationsachse versetzt wird.

Aus dem Stand der Technik sind Rührreibschweißwerkzeuge und Verfahren der eingangs genannten Art bekannt geworden. Ein entsprechendes Rührreibschweißwerkzeug weist üblicherweise einen Pin sowie eine senkrecht zum Pin angeordnete Schulter mit einem größeren Durchmesser als der Pin auf, um nebeneinander liegende Bauteile durch Vermischung von Material in einer Fügezone um das Rührreibschweißwerkzeug zu verbinden. Um eine gute Verrührung in einem Bereich des Pins zu erreichen, ist eine hohe Rotationsgeschwindigkeit des Rührreibschweißwerkezuges im Bereich des Pins vorteilhaft.

Bei Rührreibschweißwerkzeugen, welche einen starr mit der Schulter verbunden Pin aufweisen, führen entsprechend hohe Rotationsgeschwindigkeiten jedoch zu ungünstig hohen Geschwindigkeiten im Bereich der Schulter, welche negative Auswirkungen auf eine Qualität der Schweißnaht haben. Zur Vermeidung dieses Problems sind aus dem Stand der Technik Rührreibschweißwerkzeuge bekannt, bei welchen die Schulter vom Pin getrennt ist und eine andere Geschwindigkeit als der Pin aufweist, wobei gesonderte Antriebe für den Pin einerseits und die Schulter andererseits vorgeschlagen werden. Dies führt jedoch zu aufwendig herstellbaren Rührreibschweißwerkzeugen, welche zudem nur schwer handhabbar sind. Das Dokument WO 98/51441 A1 offenbart ein Rührreibschweißwerkzeug mit einem Pin und einer Schulter, wobei der Pin und die Schulter so angeordnet sind, dass sie sich in entgegengesetzte Richtungen und/oder mit unterschiedlichen Geschwindigkeiten relativ zueinander drehen.

Hier setzt die Erfindung an. Aufgabe der Erfindung ist es, ein Rührreibschweißwerkzeug der eingangs genannten Art anzugeben, welches auf konstruktiv einfache Weise herstellbar und gleichzeitig robust ist.

Weiter soll ein Rührreibschweißverfahren der eingangs genannten Art angegeben werden, welches auf konstruktiv einfache Weise umsetzbar und gleichzeitig robust in der Anwendung ist.

Die erste Aufgabe wird erfindungsgemäß durch ein Rührreibschweißwerkzeug der eingangs genannten Art gelöst, bei welchem ein Planetengetriebe mit einem Hohlrad, einem Planetenträger und einem Sonnenrad vorgesehen ist, welches Planetengetriebe mit Antriebsschaft, Pin und Schulter verbunden ist, wobei der Pin oder die Schulter mit dem Planetenträger verbunden ist, sodass Pin und Schulter durch einen Antrieb des Antriebsschaftes mittels der Spindel in Rotation um die Rotationsachse mit unterschiedlichen Rotationsgeschwindigkeiten, jedoch gleicher Rotationsrichtung versetzbar sind.

Im Rahmen der Erfindung wurde erkannt, dass durch entsprechenden Einsatz eines Planetengetriebes in einem Rührreibschweißwerkzeug eine einfache und gleichzeitig robuste Konstruktion erreicht wird. So ist einerseits ein einziger Antrieb, welcher auf das Planetengetriebe wirkt, ausreichend, um unterschiedliche Geschwindigkeiten bei Pin und Schulter zu erreichen. Durch die idente Rotationsrichtung, entlang welcher Pin und Schulter mit unterschiedlichen Geschwindigkeiten um die Rotationsachse rotieren, ist ein geringer Verschleiß an einer Kontaktfläche zwischen Pin und Schulter erreicht, zumal eine Relativgeschwindigkeit zwischen Pin und Schulter dadurch beispielsweise geringer ist als bei einem Werkzeug, bei welchem Pin und Schulter in unterschiedlichen Richtungen rotieren.

Ein derartiges Rührreibschweißwerkzeug kann auf unterschiedlichste Arten mit einem Planetengetriebe erreicht werden. Beispielsweise kann vorgesehen sein, dass die Spindel drehfest mit dem Sonnenrad, dem Planetenträger oder dem Hohlrad des Planetengetriebes verbunden ist.

Üblicherweise wird entweder das Sonnenrad oder das Hohlrad festgehalten bzw. ist entweder das Sonnenrad oder das Hohlrad um die Rotationsachse drehfest mit dem Gestell verbindbar. Indem der Planetenträger jeweils mit dem Pin oder der Schulter verbunden ist, kann auf einfache Weise eine idente Rotationsrichtung von Pin und Schulter gewährleistet werden.

Wenn das Sonnenrad mit dem Antriebsschaft drehfest verbunden ist, sodass die Spindel das Sonnenrad antreibt, ist üblicherweise das Hohlrad drehfest mit dem Gestell verbindbar und sind dann Pin und Schulter mit Sonnenrad und Planetenträger oder alternativ mit Planetenträger und Sonnenrad verbunden. In diesem Fall erfolgt somit der Abtrieb über Sonnenrad und Planetenträger, welche den Pin und die Schulter mit unterschiedlichen Geschwindigkeiten, jedoch gleicher Rotationsrichtung antreiben. Ein entsprechender Abtrieb über Sonnenrad und Planetenträger kann natürlich auch erreicht werden, wenn das Hohlrad drehfest mit dem Gestell verbindbar ist bzw. nicht um die Rotationsachse rotiert und der Antrieb über den Planetenträger erfolgt.

Wenn das Hohlrad mit dem Antriebsschaft drehfest verbunden ist, sodass die Spindel das Hohlrad antreibt, ist üblicherweise das Sonnenrad drehfest mit dem Gestell verbindbar und sind dann Pin und Schulter mit Hohlrad und Planetenträger oder alternativ Pin und Schulter mit Planetenträger und Hohlrad verbunden. In diesem Fall erfolgt somit der Abtrieb über Hohlrad und Planetenträger. Ein entsprechender Abtrieb über Hohlrad und Planetenträger kann natürlich auch erreicht werden, wenn das Sonnenrad drehfest mit dem Gestell verbindbar ist bzw. nicht um die Rotationsachse rotiert und der Antrieb über den Planetenträger erfolgt.

Unabhängig davon, welche der Komponenten des Planetengetriebes, Sonnenrad, Hohlrad und Planetenträger, angetrieben werden bzw. drehfest mit dem Antriebsschaft verbunden sind, erfolgt ein Abtrieb somit jeweils unter Mitwirkung des Planetenträgers bzw. ist der Planetenträger immer mit der Schulter oder dem Pin und nie starr mit dem Gestellt verbunden, um eine gleichsinnige Rotation von Pin und Schulter zu gewährleisten.

Bevorzugt ist vorgesehen, dass der Antriebsschaft mit dem Planetenträger oder dem Sonnenrad des Planetengetriebes verbunden ist und dass die Schulter mit dem Planetenträger sowie der Pin mit dem Sonnenrad des Planetengetriebes verbunden sind, wobei ein Hohlrad des Planetengetriebes mit einer Abstützeinrichtung verbunden ist, über welche Abstützeinrichtung das Hohlrad um die Rotationsachse drehfest mit dem Gestell der Werkzeugmaschine verbindbar ist. Alternativ können bei einer derartigen Ausführung, bei welcher das Hohlrad drehfest mit dem Gestell der Werkzeugmaschine verbunden bzw. drehfest mit dem Gestell verbindbar ist und der Antrieb über den Planetenträger oder das Sonnenrad erfolgt, natürlich auch der Pin mit dem Planetenträger und die Schulter mit dem Sonnenrad verbunden sein, beispielsweise unter Einsatz einer Hohlwelle.

Durch diese Ausbildung wird eine einfache und gleichzeitig robuste Konstruktion erreicht, mittels welcher unterschiedliche Drehzahlen von Pin und Schaft erreichbar sind. Nachdem dabei das Hohlrad, in welchem der Planetenträger über Planetenräder um die Rotationsachse des Sonnenrades drehbar ist, über die Abstützeinrichtung, welche auch Teil des Hohlrades sein kann, drehfest mit dem Gestell verbindbar ist, kann eine stabile Lagerung des Planetenträgers und somit der mit dem Planetenträger üblicherweise drehfest verbundenen Schulter des Rührreibschweißwerkezuges erreicht werden. Das Sonnenrad ist wiederum wie bei Planetengetrieben üblich über die Planeten ebenfalls im Hohlrad gelagert, sodass Pin und Schulter um die Rotationsachse und relativ zueinander drehbar sind, jedoch gleichzeitig stabil und robust über das Hohlrad gegenüber dem Gestell lagerbar sind.

In der Regel ist der Pin drehfest mit dem Sonnenrad und die Schulter drehfest mit dem Planetenträger verbunden. Der Antriebsschaft kann mit dem Planetenträger oder mit dem Sonnenrad des Planetengetriebes verbunden sein, üblicherweise drehfest um die Rotationsachse, um ein Drehmoment von der Spindel über den Planetenträger oder das Sonnenrad an das Rührreibschweißwerkzeug zu übertragen. Bevorzugt ist der Antriebsschaft mit dem Planetenträger drehfest um die Rotationsachse verbunden. Schulter, Antriebsschaft und Planetenträger können dann durch separate und verbundene Bauteile oder auch durch ein einziges Bauteil gebildet werden.

Bei einer alternativen Ausführungsform kann vorgesehen sein, dass der Antriebsschaft mit dem Hohlrad oder dem Planetenträger verbunden ist und dass die Schulter mit dem Hohlrad sowie der Pin mit dem Planetenträger des Planetengetriebes verbunden sind, wobei das Sonnenrad des Planetengetriebes mit einer Abstützeinrichtung verbunden ist, über welche Abstützeinrichtung das Sonnenrad um die Rotationsachse drehfest mit dem Gestell der Werkzeugmaschine verbindbar ist.

Auch bei dieser Ausführungsvariante, bei welcher das Sonnenrad drehfest mit dem Gestell verbindbar ist, werden somit unterschiedliche Drehzahlen von Pin und Schulter auf konstruktiv einfache Weise umgesetzt, wobei auch hier Pin und Schulter gleichsinnig rotieren, wenn ein Antrieb über den Antriebsschaft erfolgt, welcher hier mit Hohlrad oder Planetenträger verbunden ist.

Durch entsprechende Wahl von Zähnezahlen von Hohlrad, Planetenrädern und Sonnenrad können beliebige Übersetzungsverhältnisse von Drehzahl der Schulter zu Drehzahl des Pins erreicht werden, wobei die Schulter bevorzugt über den Planetenträger und den Antriebsschaft drehfest mit der Spindel einer entsprechenden Werkzeugmaschine verbunden wird.

Bevorzugt ist vorgesehen, dass Zähnezahlen von Hohlrad, Sonnenrad und einem oder mehreren Planetenrädern derart gewählt sind, dass eine Drehzahl des Pins größer ist als eine Drehzahl der Schulter. Erfolgt der Antrieb über den Planetenträger ist somit eine Drehzahl des Pins, welche in der Regel ident ist mit einer Drehzahl des Sonnenrades, höher als die Drehzahl der Spindel.

Üblicherweise sind zumindest drei Planetenräder vorgesehen, um eine gleichmäßige Einleitung eines Drehmomentes in das Sonnenrad und eine entsprechend gleichmäßige Abstützung von Schulter und Pin gegenüber dem Gestell zu erreichen.

Wenn die Zähnezahlen von Hohlrad, Sonnenrad und den Planetenrädern derart gewählt sind, dass eine Drehzahl des Pins größer ist als eine Drehzahl der Schulter, kann gleichzeitig eine besonders gute Verrührung von Material der einzelnen Bauteile im Bereich des Pins erreicht werden, wobei dennoch eine ungünstige hohe Geschwindigkeit der Schulter relativ zu Bauteilen vermieden wird, welche verschweißt werden sollen. Dadurch kann eine qualitativ hochwertige Schweißnaht insbesondere auch bei dickwandigen Bauteilen erreicht werden.

Günstig ist es, wenn eine Kraftmesseinrichtung zwischen Pin und Antriebsschaft vorgesehen ist, um eine axiale und/oder radiale Kraft auf den Pin und/oder die Schulter während eines Rührreibschweißvorganges zu bestimmen. Das Rührreibschweißverfahren kann dann abhängig von auftretenden Kräften derart geregelt werden, dass insbesondere ein Bruch des Rührreibschweißwerkzeuges auch bei hoher Vorschubgeschwindigkeit zuverlässig vermieden wird.

Bei einer Werkzeugmaschine mit einem Gestell und einer relativ zum Gestell drehbaren Spindel, wobei mit der Spindel ein Rührreibschweißwerkzeug verbunden ist, ist es günstig, wenn das Rührreibschweißwerkzeug erfindungsgemäß ausgebildet ist. Es kann dann ein Rührreibschweißverfahren umgesetzt werden, bei welchem eine Rotationsgeschwindigkeit am Pin höher ist als an der Schulter, wobei eine konstruktiv einfache und gleichzeitig robuste Umsetzung gewährleistet ist.

Bevorzugt ist bei einer solchen Werkzeugmaschine vorgesehen, dass das Hohlrad oder das Sonnenrad mittels einer Abstützeinrichtung um die Rotationsachse drehfest mit dem Gestell verbunden ist. Hierzu kann die Abstützeinrichtung beispielsweise form- und/oder kraftschlüssig mit dem Gestell verbunden sein. Die Abstützeinrichtung kann mit dem Hohlrad oder dem Sonnenrad wiederrum kraft-, form- und/oder stoffschlüssig verbunden oder auch einteilig mit dem Hohlrad oder dem Sonnenrad ausgebildet sein, beispielsweise als Lasche, über welche eine drehfeste und bevorzugt lösbare Verbindung zwischen Gestell und Hohlrad oder zwischen Gestell und Sonnenrad herstellbar ist. Es ist dann eine Geschwindigkeit des Planetenträgers und des Sonnenrades bzw., wenn das Sonnenrad mit dem Gestell drehfest verbunden ist, eine Geschwindigkeit des Planetenträgers und des Hohlrades eindeutig anhand einer Geschwindigkeit der Spindel um eine Spindelachse definiert, wobei die Spindelachse mit der Rotationsachse des Rührreibschweißwerkzeuges zusammenfallen kann.

Durch Änderung der Geschwindigkeit der Spindel können somit die Geschwindigkeiten von Pin und Schulter auf einfache Weise geändert werden. Ein Übersetzungsverhältnis von Geschwindigkeit des Pins zu Geschwindigkeit der Schulter ist üblicherweise größer als 1,0 und konstant, wenn das Hohlrad oder das Sonnenrad relativ zum Gestell in Bezug auf eine Rotation um die Rotationsachse fixiert ist. Pin und Schulter rotieren somit in derselben Richtung um die Rotationsachse, jedoch mit unterschiedlichen Geschwindigkeiten.

Es versteht sich, dass das Gestell, relativ zu welchem die Spindel sowie das Rührreibschweißwerkzeug drehbar und mit welchem das Hohlrad oder das Sonnenrad üblicherweise drehfest verbunden ist, selbst nicht ortsfest sein muss, sondern beispielsweise entlang einer Vorschubrichtung relativ zu einem Maschinentisch bewegt werden kann, um Bauteile miteinander zu verschweißen, ohne die Bauteile selbst zu bewegen.

Weiter kann es günstig sein, wenn an der Spindel eine Kraftmesseinrichtung vorgesehen ist, um eine auf die Spindel wirkende radiale und/oder axiale Kraft zu bestimmen. Ein entsprechendes Rührreibschweißverfahren kann dann basierend auf der an der Spindel gemessenen Kraft, gegebenenfalls nach einer Umrechnung auf eine auf das Rührreibschweißwerkzeug wirkende Kraft, derart geregelt werden, dass eine maximale Vorschubgeschwindigkeit erreicht wird, ohne dass maximal zulässige mechanische Beanspruchungen des Rührreibschweißwerkzeuges überschritten werden.

Bevorzugt ist vorgesehen, dass das Gestell samt der Spindel mittels eines Vorschubantriebes entlang einer Vorschubrichtung relativ zu einem Maschinentisch und/oder relativ zu verschweißenden Bauteilen bewegbar ist. Das Gestell kann somit auch durch ein relativ zum Maschinentisch bewegbares Bauteil ausgebildet sein, in welchem die Spindel um die Spindelachse drehbar gelagert ist.

Die weitere Aufgabe wird erfindungsgemäß durch ein Rührreibschweißverfahren der eingangs genannten Art gelöst, bei welchem eine Bewegung von der Spindel an den Antriebsschaft übertragen wird, wobei eine über den Antriebsschaft zugeführte Antriebsleistung über ein Planetengetriebe, welches Antriebsschaft, Pin und Schulter verbindet, auf Pin und Schulter aufgeteilt wird, wobei Pin und Schulter in dieselbe Richtung um die Rotationsachse rotieren. Durch die Aufteilung der Antriebsleistungs mittels des Planetengetriebes auf Pin und Schulter wird eine einfache und gleichzeitig robuste Kontruktion erreicht, bei welcher Pin und Schulter mit unterschiedlichen Geschwindigkeiten rotieren und dennoch ein gleichsinniges Rotieren von Pin und Schulter gewährleistet ist. Bevorzugt wird in einem solchen Verfahren ein erfindungsgemäßes Rührreibschweißwerkzeug eingesetzt.

Es hat sich bewährt, dass der Antriebsschaft mit einem Planetenträger oder einem Sonnenrad des Planetengetriebes verbunden ist, wobei das Sonnenrad des Planetengetriebes mit dem Pin verbunden ist und wobei der Planetenträger mit der Schulter des Rührreibschweißwerkzeuges verbunden ist. Alternativ kann natürlich auch das Sonnenrad mit der Schulter und der Planetenträger mit dem Pin verbunden sein. Bei einer derartigen Ausführungsvariante der Erfindung wird üblicherweise das Hohlrad festgehalten bzw. rotiert das Hohlrad nicht relativ zu einem Gestell einer Werkzeugmaschine, mit welcher das Verfahren umgesetzt wird, und auch nicht relativ zu verschweißenden Bauteilen, sondern rotieren nur Planetenträger und Sonnenrad um die Rotationsachse.

Alternativ kann vorgesehen sein, dass der Antriebsschaft mit einem Planetenträger oder einem Hohlrad des Planetengetriebes verbunden ist, wobei der Planetenträger des Planetengetriebes mit dem Pin verbunden ist und wobei das Hohlrad mit der Schulter des Rührreibschweißwerkzeuges verbunden ist. Ferner kann bei einer derartigen Ausführungsvariante, bei welcher der Antrieb über den Planetenträger oder das Hohlrad erfolgt, auch vorgesehen sein, dass der Planetenträger mit der Schulter und das Hohlrad mit dem Pin verbunden ist, um unterschiedliche Geschwindigkeiten von Pin und Schulter zu erreichen. Bei einer derartigen Ausführungsvariante der Erfindung wird üblicherweise das Sonnenrad festgehalten bzw. rotiert das Sonnenrad relativ zu einem Gestell einer Werkzeugmaschine nicht, mit welcher das Verfahren umgesetzt wird, und rotiert das Sonnenrad entsprechend relativ zu verschweißenden Bauteilen nicht, sondern rotieren dann nur Planetenträger und Hohlrad um die Rotationsachse.

Aufgrund des Einsatzes eines Getriebes zwischen Pin und Schulter kann eine Rotationsgeschwindigkeit des Pins von einer Rotationsgeschwindigkeit der Schulter abweichen, um insbesondere eine hohe Rotationsgeschwindigkeit des Pins bei gleichzeitig zulässigen Relativgeschwindigkeiten zwischen Schulter und den zu verbindenden Bauteilen zu erreichen.

Bevorzugt ist vorgesehen, dass eine Rotationsgeschwindigkeit des Pins um die Rotationsachse höher ist als eine Rotationsgeschwindigkeit der Schulter um die Rotationsachse.

Es hat sich bewährt, dass an der Spindel und/oder am Rührreibschweißwerkzeug eine axiale und/oder radiale Kraft gemessen wird. Eine entsprechend gemessene Kraft kann insbesondere dazu eingesetzt werden, das Rührreibschweißverfahren zu regeln, um eine maximal mögliche Vorschubgeschwindigkeit ohne Beschädigung des Rührreibschweißwerkzeuges zu gewährleisten.

Weitere Merkmale, Vorteile und Wirkungen der Erfindung ergeben sich anhand des nachfolgend dargestellten Ausführungsbeispiels. In der Zeichnung, auf welche dabei Bezug genommen wird, zeigt:

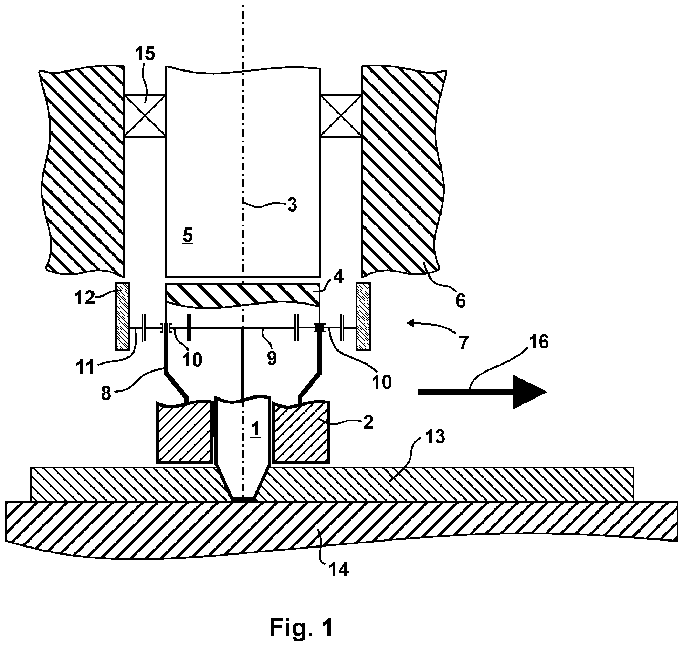

Fig. 1 ein erfindungsgemäßes Rührreibschweißwerkzeug in schematischer Darstellung.

Fig. 1 zeigt ein erfindungsgemäßes Rührreibschweißwerkzeug samt einem Teil einer Werkzeugmaschine und zu verbindenden Bauteilen 13 in schematischer Schnittdarstellung. Wie ersichtlich weist das Rührreibschweißwerkzeug einen Pin 1 und eine Schulter 2 sowie einen Antriebsschaft 4 auf, welche um eine Rotationsachse 3 drehbar in einem Gestell 6 der Werkzeugmaschine angeordnet und durch eine Spindel 5 der Werkzeugmaschine antreibbar sind. Die Spindel 5 ist wiederrum mit dem Gestell 6 durch Lager 15 um eine Spindelachse drehbar verbunden, wobei die Spindelachse hier mit der Rotationsachse 3 der Rührreibschweißwerkzeuges zusammenfällt.

Die Spindel 5 der Werkzeugmaschine ist mit dem Antriebsschaft 4 des Rührreibschweißwerkzeuges drehfest und üblicherweise lösbar verbunden, welcher Antriebsschaft 4 im dargestellten Ausführungsbeispiel wiederum drehfest mit der Schulter 2 des Rührreibschweißwerkzeuges verbunden ist. Alternativ könnte der Antriebsschaft 4 auch mit dem Pin 1 drehfest verbunden sein.

Um unterschiedliche Geschwindigkeiten von Pin 1 und Schulter 2 zu erreichen, weist das Rührreibschweißwerkzeug ein Planetengetriebe 7 auf, wobei die Schulter 2 und im dargestellten Beispiel auch der Antriebsschaft 4 drehfest mit einem Planetenträger 8 dieses Planetengetriebes 7 verbunden sind. Der Planetenträger 8 ist wie bei Planetengetrieben 7 bzw. Umlaufgetrieben üblich über drehbar mit dem Planetenträger 8 verbundene Planetenräder 10 mit einem Hohlrad 11 verbunden, wobei die Planetenräder 10 einerseits in das Hohlrad 11 und andererseits in ein Sonnenrad 9 des Planetengetriebes 7 eingreifen. Entsprechend rotieren Sonnenrad 9 und Planetenträger 8 um dieselbe Rotationsachse 3, während die Planetenräder 10 um Rotationsachsen 3 rotieren, welche mit dem Planetenträger 8 im Hohlrad 11 umlaufen.

Das Hohlrad 11 dieses Planetengetriebes 7 ist gemäß einer ersten Ausführungsvariante der Erfindung drehfest mit dem Gestell 6 der Werkzeugmaschine verbunden, und zwar über eine Abstützeinrichtung 12, welche beispielsweise zur kraft und/oder formschlüssigen Verbindung mit dem Gestell 6 ausgebildet sein kann. Das Sonnenrad 9 des Planetengetriebes 7 ist hier drehfest mit dem Pin 1 des Rührreibschweißwerkzeuges verbunden, sodass die Schulter 2 des Rührreibschweißwerkzeuges eine dem Planetenträger 8 entsprechende Rotationsgeschwindigkeit und der Pin 1 eine dem Sonnenrad 9 entsprechende Rotationsgeschwindigkeit aufweisen.

Aufgrund dieser Anordnung wird ein Drehzahlunterschied zwischen Pin 1 und Schulter 2 erreicht, wobei bevorzugt zwischen Schulter 2 und Pin 1 eine Übersetzung ins Schnelle umgesetzt ist, sodass also eine Rotationsgeschwindigkeit des Pins 1 um die Rotationsachse 3 üblicherweise höher ist als eine Rotationsgeschwindigkeit der Schulter 2 um die Rotationsachse 3. Im dargestellten Ausführungsbeispiel rotieren Pin 1 und Schulter 2 in dieselbe Richtung. Nachdem das Hohlrad 11 im Ausführungsbeispiel drehfest mit dem Gestell 6 verbunden ist, ist eine Geschwindigkeit des Planetenträgers 8, und somit eine Geschwindigkeit der Schulter 2, sowie eine Geschwindigkeit des Sonnenrades 9, und somit eine Geschwindigkeit des Pins 1, über Zähnezahlen von Hohlrad 11, den Planetenrädern 10 und dem Sonnenrad 9 eindeutig definiert.

Wie schematisch dargestellt kann das Gestell 6 samt der Spindel 5 und dem Rührreibschweißwerkzeug entlang einer Vorschubrichtung 16 relativ zu einem Maschinentisch 14, mit welchem zu verschweißende Bauteile 13 starr verbunden sein können, bewegt werden, um die Bauteile 13 mittels einer sich entlang der Vorschubrichtung 16 erstreckenden Schweißnaht miteinander zu verbinden.

Wenngleich im dargestellten Ausführungsbeispiel das Hohlrad 11 drehfest mit dem Gestell 6 verbunden ist und der Antrieb über den Planetenträger 8 erfolgt, sind natürlich auch weitere Ausführungsvarianten der Erfindung möglich, bei welchen nicht das Hohlrad 11, sondern das Sonnenrad 9 drehfest mit dem Gestell 6 verbunden ist und bei welchen der Antrieb über das Hohlrad 11 oder den Planetenträger 8 erfolgt.

Weiter versteht es sich, dass jede der Komponenten des Planetengetriebes 7, Planetenträger 8, Sonnenrad 9 und Hohlrad 11, welche nicht drehfest mit dem Gestell 6 verbunden ist, entweder mit dem Pin 1 oder mit der Schulter 2 verbunden sein kann, um unterschiedliche Geschwindigkeiten von Pin 1 und Schulter 2 und gleichzeitig eine gleichsinnige Rotation von Pin 1 und Schulter 2 zu erreichen.

Somit ergeben sich jeweils vier Ausführungsvarianten der Erfindung, bei welchen das Hohlrad 11 drehfest mit dem Gestell 6 verbunden ist. Eine erste Ausführungsvariante entspricht der in Fig. 1 dargestellten Ausführungsvariante, bei welcher die Schulter 2 mit dem Planetenträger 8 und der Pin 1 mit dem Sonnenrad 9 drehfest verbunden sind und der Antrieb über den Planetenträger 8 erfolgt bzw. der Planetenträger 8 drehfest mit dem Antriebsschaft 4 verbunden ist.

Gemäß einer zweiten, nicht dargestellten, Ausführungsvariante kann im Unterschied zur ersten Ausführungsvariante der Pin 1 mit dem Planetenträger 8 und die Schulter 2 mit dem Sonnenrad 9 drehfest verbunden sein. Eine Verbindung des Planetenträgers 8 mit dem Pin 1 kann beispielsweise durch eine Hohlwelle des Sonnenrades 9 erfolgen.

Eine dritte, ebenfalls nicht dargestellte Ausführungsvariante entspricht in Bezug auf die Koppelung von Pin 1 und Schulter 2 mit dem Planetengetriebe 7 der ersten Ausführungsvariante, wobei jedoch der Antriebsschaft 4 nicht mit dem Planetenträger 8, sondern mit dem Sonnenrad 9 gekoppelt ist.

Analog kann der Antriebsschaft 4 auch gemäß einer vierten, ebenfalls nicht dargestellten Ausführungsvariante mit dem Sonnenrad 9 gekoppelt sein, wobei die vierte Ausführungsvariante in Bezug auf die Koppelung von Pin 1 und Schulter 2 mit dem Planetengetriebe 7 der zweiten Ausführungsvariante entspricht, sodass auch hier der Pin 1 mit dem Planetenträger 8 und die Schulter 2 mit dem Sonnenrad 9 drehfest verbunden sind.

Vier weitere, ebenfalls nicht dargestellte Ausführungsvarianten können analog gebildet werden, indem nicht das Hohlrad 11, sondern das Sonnenrad 9 drehfest mit dem Gestell 6 verbunden wird und Pin 1 und Schulter 2 mit Hohlrad 11 und Planetenträger 8 bzw. mit Planetenträger 8 und Hohlrad 11 gekoppelt werden, wobei der Antrieb über den Planetenträger 8 oder das Hohlrad 11 erfolgen kann. Die Erfindung kann somit auf zumindest acht unterschiedliche Weisen umgesetzt werden, wobei jeweils die erfindungsgemäßen Wirkungen erzielt werden.

Mit einem erfindungsgemäßen Rührreibschweißwerkzeug sowie einem entsprechenden Rührreibschweißverfahren wird auf einfache Weise erreicht, dass eine Geschwindigkeit des Pins 1 von einer Geschwindigkeit der Schulter 2 abweicht. Dadurch kann sowohl im Bereich des Pins 1 eine besonders gute Verrührung von Material der einzelnen Bauteile 13 erreicht als auch im Bereich der Schulter 2 eine unzulässig hohe Erwärmung durch zu hohe Relativgeschwindigkeiten zwischen der Schulter 2 und den Bauteilen 13 vermieden werden, um qualitativ besonders hochwertige Schweißnähte im Rührreibschweißverfahren zu erreichen. Der Einsatz eines Planetengetriebes 7 gewährleistet hierbei einen robusten und gleichzeitig konstruktiv einfachen Aufbau.

## Patentansprüche

1. Rührreibschweißwerkzeug für eine Werkzeugmaschine, welche ein Gestell (6) und eine relativ zum Gestell (6) drehbare Spindel (5) aufweist, wobei das Rührreibschweißwerkzeug einen Pin (1) und eine Schulter (2) sowie einen Antriebsschaft (4) aufweist, welcher mit der Spindel (5) der Werkzeugmaschine verbindbar ist, um über die Spindel (5) den Pin (1) und die Schulter (2) in eine Drehbewegung um eine Rotationsachse (3) zu versetzen, wobei die Schulter (2) relativ zum Pin (1) um die Rotationsachse (3) drehbar ist, **dadurch gekennzeichnet, dass** ein Planetengetriebe (7) mit einem Hohlrad (11), einem Planetenträger (8) und einem Sonnenrad (9) vorgesehen ist, welches Planetengetriebe mit Antriebsschaft (4), Pin (1) und Schulter (2) verbunden ist, wobei der Pin (1) oder die Schulter (2) mit dem Planetenträger (8) verbunden ist, sodass Pin (1) und Schulter (2) durch einen Antrieb des Antriebsschaftes (4) mittels der Spindel (5) in Rotation um die Rotationsachse (3) mit unterschiedlichen Rotationsgeschwindigkeiten, jedoch gleicher Rotationsrichtung versetzbar sind.

2. Rührreibschweißwerkzeug nach Anspruch 1, **dadurch gekennzeichnet, dass** der Antriebsschaft (4) mit dem Planetenträger (8) oder dem Sonnenrad (9) des Planetengetriebes (7) verbunden ist und wobei die Schulter (2) mit dem Planetenträger (8) sowie der Pin (1) mit dem Sonnenrad (9) des Planetengetriebes (7) verbunden sind, wobei das Hohlrad (11) des Planetengetriebes (7) mit einer Abstützeinrichtung (12) verbunden ist, über welche Abstützeinrichtung (12) das Hohlrad (11) um die Rotationsachse (3) drehfest mit dem Gestell (6) der Werkzeugmaschine verbindbar ist.

3. Rührreibschweißwerkzeug nach Anspruch 1, **dadurch gekennzeichnet, dass** der Antriebsschaft (4) mit dem Hohlrad (11) oder dem Planetenträger (8) verbunden ist und wobei die Schulter (2) mit dem Hohlrad (11) sowie der Pin (1) mit dem Planetenträger (8) des Planetengetriebes (7) verbunden sind, wobei das Sonnenrad (9) des Planetengetriebes (7) mit einer Abstützeinrichtung (12) verbunden ist, über welche Abstützeinrichtung (12) das Sonnenrad (9) um die Rotationsachse (3) drehfest mit dem Gestell (6) der Werkzeugmaschine verbindbar ist.

4. Rührreibschweißwerkzeug nach einem der Ansprüche 1 bis 3, **dadurch gekennzeichnet, dass** Zähnezahlen von Hohlrad (11), Sonnenrad (9) und einem oder mehreren Planetenrädern (10) derart gewählt sind, dass eine Drehzahl des Pins (1) größer ist als eine Drehzahl der Schulter (2).

5. Rührreibschweißwerkzeug nach einem der Ansprüche 1 bis 4, **dadurch gekennzeichnet, dass** eine Kraftmesseinrichtung zwischen Pin (1) und Antriebsschaft (4) vorgesehen ist, um eine axiale und/oder radiale Kraft auf den Pin (1) und/oder die Schulter (2) während eines Rührreibschweißvorganges zu bestimmen.

6. Werkzeugmaschine mit einem Gestell (6) und einer relativ zum Gestell (6) drehbaren Spindel (5), wobei mit der Spindel (5) ein Rührreibschweißwerkzeug verbunden ist, **dadurch gekennzeichnet, dass** das Rührreibschweißwerkzeug nach einem der Ansprüche 1 bis 5 ausgebildet ist.

7. Werkzeugmaschine nach Anspruch 6, **dadurch gekennzeichnet, dass** das Hohlrad (11) oder das Sonnenrad (9) mittels einer Abstützeinrichtung (12) um die Rotationsachse (3) drehfest mit dem Gestell (6) verbunden ist.

8. Werkzeugmaschine nach Anspruch 6 oder 7, **dadurch gekennzeichnet, dass** an der Spindel (5) eine Kraftmesseinrichtung vorgesehen ist, um eine auf die Spindel (5) wirkende radiale und/oder axiale Kraft zu bestimmen.

9. Werkzeugmaschine nach einem der Ansprüche 6 bis 8, **dadurch gekennzeichnet, dass** das Gestell (6) samt der Spindel (5) mittels eines Vorschubantriebes entlang einer Vorschubrichtung (16) relativ zu einem Maschinentisch (14) und/oder relativ zu verschweißenden Bauteilen (13) bewegbar ist.

10. Rührreibschweißverfahren, wobei ein Rührreibschweißwerkzeug mit einem Antriebsschaft (4), einem Pin (1) und einer Schulter (2) mit einer Spindel (5) einer Werkzeugmaschine in eine Rotationsbewegung um eine Rotationsachse (3) versetzt wird, wobei eine Bewegung von der Spindel (5) an den Antriebsschaft (4) übertragen wird, und **dadurch gekennzeichnet, dass** eine über den Antriebsschaft (4) zugeführte Antriebsleistung über ein Planetengetriebe, welches Antriebsschaft (4), Pin (1) und Schulter (2) verbindet, auf Pin (1) und Schulter (2) aufgeteilt wird, wobei Pin (1) und Schulter (2) in dieselbe Richtung um die Rotationsachse (3) rotieren, wobei insbesondere ein Rührreibschweißwerkzeug nach einem der Ansprüche 1 bis 9 eingesetzt wird.

11. Rührreibschweißverfahren nach Anspruch 10, **dadurch gekennzeichnet, dass** der Antriebsschaft (4) mit einem Planetenträger (8) oder einem Sonnenrad (9) des Planetengetriebes (7) verbunden ist, wobei das Sonnenrad (9) des Planetengetriebes (7) mit dem Pin (1) verbunden ist und wobei der Planetenträger (8) mit der Schulter (2) des Rührreibschweißwerkzeuges verbunden ist.

12. Rührreibschweißverfahren nach Anspruch 10, **dadurch gekennzeichnet, dass** der Antriebsschaft (4) mit einem Planetenträger (8) oder einem Hohlrad (11) des Planetengetriebes (7) verbunden ist, wobei der Planetenträger (8) des Planetengetriebes (7) mit dem Pin (1) verbunden ist und wobei das Hohlrad (11) mit der Schulter (2) des Rührreibschweißwerkzeuges verbunden ist.

13. Rührreibschweißverfahren nach einem der Ansprüche 10 bis 12, **dadurch gekennzeichnet, dass** eine Rotationsgeschwindigkeit des Pins (1) um die Rotationsachse (3) höher ist als eine Rotationsgeschwindigkeit der Schulter (2) um die Rotationsachse (3).

14. Rührreibschweißverfahren nach einem der Ansprüche 10 bis 13, **dadurch gekennzeichnet, dass** an der Spindel (5) und/oder am Rührreibschweißwerkzeug eine axiale und/oder radiale Kraft gemessen wird.

## Claims

1. A friction stir welding tool for a machine tool, which has a frame (6) and a spindle (5) which is rotatable relative to the frame (6), wherein the friction stir welding tool has a pin (1) and a shoulder (2) as well as a drive shaft (4), which is connectable to the spindle (5) of the machine tool, in order to set the pin (1) and the shoulder (2) in a rotational movement about a rotation axis (3) via the spindle (5), wherein the shoulder (2) is rotatable relative to the pin (1) about the rotation axis (3), **characterized in that** a planetary transmission (7) is provided with a ring gear (11), a planet carrier (8) and a sun gear (9), which planetary transmission is connected to drive shaft (4), pin (1) and shoulder (2), wherein the pin (1) or the shoulder (2) is connected to the planet carrier (8), so that pin (1) and shoulder (2) are able to be set in rotation by a drive of the drive shaft (4) by means of the spindle (5) about the rotation axis (3) with different rotation speeds by with the same rotation direction.

2. The friction stir welding tool according to Claim 1, **characterized in that** the drive shaft (4) is connected to the planet carrier (8) or to the sun gear (9) of the planetary transmission (7), and wherein the shoulder (2) is connected to the planet carrier (8), and the pin (1) is connected to the sun gear (9) of the planetary transmission (7), wherein the ring gear (11) of the planetary transmission (7) is connected to a supporting device (12), via which supporting device (12) the ring gear (11) is able to be connected to the frame (6) of the machine tool in a rotationally fixed manner about the rotation axis (3).

3. The friction stir welding tool according to Claim 1, **characterized in that** the drive shaft (4) is connected to the ring gear (11) or to the planet carrier (8), and wherein the shoulder (2) is connected to the ring gear (11), and the pin (1) is connected to the planet carrier (8) of the planetary transmission (7), wherein the sun gear (9) of the planetary transmission (7) is connected to a supporting device (12), via which supporting device (12) the sun gear (9) is able to be connected to the frame (6) of the machine tool in a rotationally fixed manner about the rotation axis (3).

4. The friction stir welding tool according to one of Claims 1 to 3, **characterized in that** numbers of teeth of ring gear (11), sun gear (9) and one of more planet gears (10) are selected such that a rotation speed of the pin (1) is greater than a rotation speed of the shoulder (2).

5. The friction stir welding tool according to one of Claims 1 to 4, **characterized in that** a force measuring device is provided between pin (1) and drive shaft (4), in order to determine an axial and/or radial force onto the pin (1) and/or the shoulder (2) during a friction stir welding operation.

6. A machine tool with a frame (6) and with a spindle (5) rotatable relative to the frame (6), wherein a friction stir welding tool is connected to the spindle (5), **characterized in that** the friction stir welding tool is configured according to one of Claims 1 to 5.

7. The machine tool according to Claim 6, **characterized in that** the ring gear (11) or the sun gear (9) is connected to the frame (6) in a rotationally fixed manner about the rotation axis (3) by means of a supporting device (12) .

8. The machine tool according to Claim 6 or 7, **characterized in that** on the spindle (5) a force measuring device is provided, in order to determine a radial and/or axial force acting on the spindle (5).

9. The machine tool according to one of Claims 6 to 8, **characterized in that** the frame (6) together with the spindle (5) is movable by means of a feed drive along a feed direction (16) relative to a machine table (14) and/or relative to components (13) being welded.

10. A friction stir welding method, wherein a friction stir welding tool having a drive shaft (4), a pin (1) and a shoulder (2) is set in a rotational movement about a rotation axis (3) by a spindle (5) of a machine tool, wherein a movement is transferred from the spindle (5) to the drive shaft (4), and **characterized in that** a drive power, supplied via the drive shaft (4), is distributed to pin (1) and shoulder (2) via a planetary transmission which connects drive shaft (4), pin (1) and shoulder (2), wherein pin (1) and shoulder (2) rotate in the same direction about the rotation axis (3), wherein in particular a friction stir welding tool according to one of Claims 1 to 9 is used.

11. The friction stir welding method according to Claim 10, **characterized in that** the drive shaft (4) is connected to a planet carrier (8) or to a sun gear (9) of the planetary transmission (7), wherein the sun gear (9) of the planetary transmission (7) is connected to the pin (1) and wherein the planet carrier (8) is connected to the shoulder (2) of the friction stir welding tool.

12. The friction stir welding method according to Claim 10, **characterized in that** the drive shaft (4) is connected to a planet carrier (8) or to a ring gear (11) of the planetary transmission (7), wherein the planet carrier (8) of the planetary transmission (7) is connected to the pin (1), and wherein the ring gear (11) is connected to the shoulder (2) of the friction stir welding tool.

13. The friction stir welding method according to one of Claims 10 to 12, **characterized in that** a rotation speed of the pin (1) about the rotation axis (3) is higher than a rotation speed of the shoulder (2) about the rotation axis (3).

14. The friction stir welding method according to one of Claims 10 to 13, **characterized in that** an axial and/or radial force is measured on the spindle (5) and/or on the friction stir welding tool.

## Revendications

1. Outil de soudage par friction-malaxage pour une machine-outil, laquelle comporte un bâti (6) et une broche (5) pouvant tourner par rapport au bâti (6), sachant que l'outil de soudage par friction-malaxage comporte un pion (1) et un épaulement (2) ainsi qu'un arbre d'entraînement (4), lequel peut être relié à la broche (5) de la machine-outil pour placer le pion (1) et l'épaulement (2) dans un mouvement de rotation autour d'un axe de rotation (3) par le biais de la broche (5), sachant que l'épaulement (2) peut être mis en rotation par rapport au pion (1) autour de l'axe de rotation (3), **caractérisé en ce qu'**un train d'engrenages planétaires (7) avec une roue creuse (11), un support planétaire (8) et une roue solaire (9) est prévu, lequel train d'engrenages planétaires est relié à l'arbre d'entraînement (4), au pion (1) et à l'épaulement (2), sachant que le pion (1) ou l'épaulement (2) est relié au support planétaire (8) de sorte que le pion (1) et l'épaulement (2) peuvent être mis en rotation par un entraînement de l'arbre d'entraînement (4) autour de l'axe de rotation (3) au moyen de la broche (5) avec des vitesses de rotation différentes, toutefois dans le même sens de rotation.

2. Outil de soudage par friction-malaxage selon la revendication 1, **caractérisé en ce que** l'arbre d'entraînement (4) est relié au support planétaire (8) ou à la roue solaire (9) du train d'engrenages planétaires (7) et sachant que l'épaulement (2) est relié au support planétaire (8) et le pion (1) est relié à la roue solaire (9) des engrenages planétaires (7), sachant que la roue creuse (11) du train d'engrenages planétaires (7) est reliée à un dispositif de support (12), dispositif de support (12) par le biais duquel la roue creuse (11) peut être reliée solidaire en rotation au bâti (6) de la machine-outil autour de l'axe de rotation (3).

3. Outil de soudage par friction-malaxage selon la revendication 1, **caractérisé en ce que** l'arbre d'entraînement (4) est relié à la roue creuse (11) ou au support planétaire (8) et sachant que l'épaulement (2) est relié à la roue creuse (11) et le pion (1) au support planétaire (8) du train d' engrenages planétaires (7), sachant que la roue solaire (9) du train d'engrenages planétaires (7) est reliée au dispositif de support (12), dispositif de support (12) par le biais duquel la roue solaire (9) peut être reliée solidaire en rotation au bâti (6) de la machine-outil autour de l'axe de rotation (3).

4. Outil de soudage par friction-malaxage selon l'une quelconque des revendications 1 à 3, **caractérisé en ce que** les nombres de dents de la roue creuse (11), de la roue solaire (9) et d'une ou plusieurs des roues planétaires (10) sont sélectionnés de telle manière qu'un nombre de tours du pion (1) est plus grand qu'un nombre de tours de l'épaulement (2).

5. Outil de soudage par friction-malaxage selon l'une quelconque des revendications 1 à 4, **caractérisé en ce qu'**un système de mesure de force est prévu entre le pion (1) et l'arbre d'entraînement (4) pour déterminer une force radiale et/ou radiale sur le pion (1) et/ou l'épaulement (2) pendant une opération de soudage par friction-malaxage.

6. Machine-outil avec un bâti (6) et une broche (5) pouvant tourner par rapport au bâti (6), sachant qu'un outil de soudage par friction-malaxage est relié à la broche (5), **caractérisée en ce que** l'outil de soudage par friction-malaxage est constitué selon l'une quelconque des revendications 1 à 5.

7. Machine-outil selon la revendication 6, **caractérisée en ce que** la roue creuse (11) ou la roue solaire (9) est reliée au moyen d'un dispositif de support (12) solidaire en rotation au bâti (6) autour de l'axe de rotation (3).

8. Machine-outil selon la revendication 6 ou 7, **caractérisée en ce qu'**un système de mesure de force est prévu sur la broche (5) pour déterminer une force radiale et/ou axiale agissant sur la broche (5).

9. Machine-outil selon l'une quelconque des revendications 6 à 8, **caractérisée en ce que** le bâti (6) avec la broche (5) peut être déplacé au moyen d'un entraînement d'avance le long d'un sens d'avance (16) par rapport à une table de machine (14) et/ou par rapport à des composants à souder (13).

10. Procédé de soudage par friction-malaxage, sachant qu'un outil de soudage par friction-malaxage avec un arbre d'entraînement (4), un pion (1) et un épaulement (2) est placé dans un mouvement de rotation autour d'un axe de rotation (3) avec une broche (5) d'une machine-outil, sachant qu'un mouvement de la broche (5) est transmis à l'arbre d'entraînement (4) et **caractérisé en ce qu'**une puissance d'entraînement apportée par l'arbre d'entraînement (4) est répartie sur le pion (1) et l'épaulement (2), lequel arbre d'entraînement (4) relie pion (1) et épaulement (2), sachant que le pion (1) et l'épaulement (2) tournent dans la même direction autour de l'axe de rotation (3), sachant en particulier qu'un outil de soudage par friction-malaxage est mis en œuvre selon l'une quelconque des revendications 1 à 9.

11. Outil de soudage par friction-malaxage selon la revendication 10, **caractérisé en ce que** l'arbre d'entraînement (4) est relié à un support planétaire (8) ou une roue solaire (9) des engrenages planétaires (7), sachant que la roue solaire (9) des engranges planétaires (7) est reliée au pion (1) et sachant que le support planétaire (8) est relié à l'épaulement (2) de l'outil de soudage par friction-malaxage.

12. Outil de soudage par friction-malaxage selon la revendication 10, **caractérisé en ce que** l'arbre d'entraînement (4) est relié à un support planétaire (8) ou une roue creuse (11) du train d'engrenages planétaires (7), sachant que le support planétaire (8) du train d'engrenages planétaires (7) est relié au pion (1) et sachant que la roue creuse (11) est reliée à l'épaulement (2) de l'outil de soudage par friction-malaxage.

13. Outil de soudage par friction-malaxage selon l'une quelconque des revendications 10 à 12, **caractérisé en ce qu'**une vitesse de rotation du pion (1) autour de l'axe de rotation (3) est plus élevée qu'une vitesse de rotation de l'épaulement (2) autour de l'axe de rotation (3) .

14. Outil de soudage par friction-malaxage selon l'une quelconque des revendications 10 à 13, **caractérisé en ce qu'**une force axiale et/ou radiale est mesurée sur la broche (5) et/ou sur l'outil de soudage par friction-malaxage.
